# EUROPÄISCHE PATENTSCHRIFT

(11) **EP 0 471 239 B1**
(45) Veröffentlichungstag und Bekanntmachung des Hinweises auf die Patenterteilung: **18.01.1995**
(21) Anmeldenummer: 91112839.5
(22) Anmeldetag: 31.07.1991
(51) Int. Cl.: G01N 29/00

(54) **Verfahren und Vorrichtung zur zerstörungsfreien Prüfung von Oberflächenschichten, insbesondere von kompliziert geformten grossen Bauteilen**
Method and apparatus for non destructive testing of superficial layers, especially of big construction pieces having a complex form
Procédé et dispositif pour examen non destructif de couches superficielles, en particulier de grosses pièces de construction à formes compliquées

(30) Priorität: 13.08.1990 DD 343412
(43) Veröffentlichungstag der Anmeldung: 19.02.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schneider, Dieter, Dr. rer. nat., O-8020 Dresden (DE); Brenner, Berndt, Dr. rer. nat., O-8020 Dresden (DE)

(56) Entgegenhaltungen:
- US-A- 4 246 793
- APPLIED PHYSICS LETTERS Band 49, Nr. 21, 28. November 1986, Seiten 1420-1422, New York NY, US; A.C. TAM et al.: "Ultrasonic imaging of layered structures utilizing nondestructive subnanosecond photoacoustic pulse generation"
- APPLIED OPTICS Band 27, Nr. 22, 15. November 1988, Seiten 4690-4695, New York NY, US; A.J.A. BRUINSMA et al.: "Ultrasonic noncontact inspection system with optical fiber methods"
- PROCEEDINGS OF THE IEEE 1989 ULTRASONICS SYMPOSIUM Band 2, 3.-6. Oktober 1989, Seiten 1181-1190, Montreal, CA; T.D. DUDDERAR et al. : "Fiber optic sensor systems for ultrasonic NDE : state-of-the-art and future potential"
- PROCEEDINGS OF THE IEEE 1989 ULTRASONICS SYMPOSIUM Band 1, 3.-6. Oktober 1989, Seiten 539-544, Montreal, CA; R.K. KING et al. : "Focussing and beamsteering of laser generated ultrasound"

## Beschreibung

Die Erfindung bezieht sich auf das Gebiet der zerstörungsfreien Werkstaffprüfung. Objekte, bei denen ihre Anwendung möglich und zweckmäßig ist, sind Oberflächenschichten von Bauteilen des Maschinen-, Anlagen- und Apparatebaues. Besonders vorteilhaft ist die Erfindung bei der Bestimmung der Einhärtetiefe und der Oberflächenhärte von randschichtgehärteten kompliziert geformten und großen Bauteilen aus Stahl anwendbar.

Es ist bekannt, bestimmte eigenschaftsrelevante Charakteristiken von Oberflächenschichten, wie z.B. Schichtdicke, Einhärtetiefe, Risse, Einschlüsse oder ähnliches zerstörungsfrei an größeren, auch kompliziert geformten Bauteilen mittels photothermischen Verfahren lokal zu messen (Oberflächenprüfung mit dem P.O.P.- System, Prospekt " Phototherm" der Dr. Petry GmbH). Dazu bestrahlt ein Laser mit einem modulierten Lichtstrahl die Oberfläche. Der in Wärme umgewandelte Teil des Lichtes dringt als Wärmewelle einer bestimmten thermischen Diffusionslänge in das Material ein In Abhängigkeit von der materialabhängigen Diffusionslänge entsteht an der Oberfläche eine spezifische Wärmeabstrahlung, deren Wirkung als thermische Linse mittels eines positionsempfindlichen Photodetektors ausgemessen wird. Der Mangel des Verfahrens besteht darin, daß das Verfahren für jede von einem Standard in stärkerem Maße abweichende Oberflächenkrümmung aufwendig neu kalibriert werden muß. Die Ursache dafür ist, daß die Wärmeabstrahlung der Oberfläche selbst abhängig ist von der Oberflächenkrümmung.

Weiterhin ist bekannt, die Dispersion von Ultraschall-Oberflächenwellen zur Bestimmung von Schichtdicken, Einhärtetiefen, Eigenspannungen, Dichte- oder E-Modulgradienten einzusetzen (z. B.: D. Schneider, T. Schwarz, B. Brenner, "Neue Hütte" 34 (1989) Heft 6, S. 207-212). Dazu wird durch einen Laserimpuls auf thermoelastische Weise eine Oberflächenwelle mit einem weiten Frequenzspektrum angeregt und bei einer ausgewählten Mittenfrequenz f mit einem in einem Abstand L in Ausbreitungsrichtung befindlichen piezoelektrischen Wandler empfangen. Nach Einstellung zweier verschiedener Abstände L₁, L₂ werden zwei Laufzeiten t₁, t₂ des Schallimpulses gemessen und nach c = (L₂ - L₁)/(t₂ - t₁) die Schallgeschwindigkeit c für die Frequenz f bestimmt. Da der piezoelektrische Wandler zwischen den beiden Messungen wegen der nicht zu vermeidenden Änderung der Ankoppelbedingungen nicht verschoben werden kann, müssen die Abstände L₁, L₂ durch eine Veränderung der Position des Auftreffpunktes des Laserstrahles eingestellt werden. Der Mangel dieses Verfahrens besteht darin, daß es sehr aufwendig ist, größere Bauteile oder die gesamte Meßanordnung relativ zueinander mit der erforderlichen Genauigkeit zu verschieben. Die Ursache dafür ist, daß die Variation der Meßabstände L₁, L₂ nur mit einer Relativverschiebung Bauteil -Meßanordnung möglich ist. Ein weiterer Nachteil besteht darin, daß die Streuung der Meßwerte zu groß ist. Die Ursache dafür ist, daß zur Messung zwei verschiedene, willkürlich herausgegriffene Impulse der stochastisch schwankenden Laserimpulshöhenverteilung und Laserimpulsformverteilung herausgegriffen werden.

Das Ziel der Erfindung ist es, ein Verfahren zur zerstörungsfreien Prüfüng von Oberflächenschichten, das wenig aufwendig ist und eine Vorrichtung zur Durchführung dieses Verfahrens, die die Messung ohne große Streuung der Meßwerte auch für große, kompliziert geformte Bauteile gestattet, vorzuschlagen.

Der Erfindung liegt die Aufgabe zugrunde, ein Verfahren und eine Vorrichtung anzugeben, bei denen der Meßwert nicht wesentlich von der Oberflächenkrümmung beeinflußt wird und die es gestatten, Charakteristika von Oberflächenschichten ohne Relativverschiebung Bauteil - Laserstrahlauftreffpunkt und mit einem einzigen Laserimpuls zu bestimmen.

Erfindungsgemäß wird die Aufgabe in einem Verfahren zur zerstörungsfreien Prüfung von Oberflächenschichten, insbesondere von kompliziert geformten großen Bauteilen mittels der Bestimmung der Ausbreitungsgeschwindigkeit eines thermoelasisch angeregten Ultraschall-Oberflächenwellenimpulses bei einer geeignet gewählten Schallfrequenz gelöst, indem der Laserimpuls in zwei räumlich getrennte Teilimpulse etwa gleicher Intensität aufgespalten wird, der Abstand zwischen den beiden Brennlinien durch eine Verschiebung des Strahlteilers oder von Einzelelementen des Strahlteilers oder des nachfolgenden optischen Elementes entlang der optischen Achse auf ein von der Bauteilgeometrie, der Frequenz der Ultraschallwellen und der Dämpfung abhängendes Maß eingestellt und für nachfolgende Messungen konstant gehalten wird, der ultraschallmäßig wirksame Abstand L₂ - L₁ zwischen den beiden Brennlinien durch die Messung der Laufzeitdifferenz t₂′ - t₁′ der thermoelastisch angeregten Ultraschallimpulse bei einem Material mit bekannter Ausbreitungsgeschwindigkeit der Ultraschall-Oberflächenwellen bestimmt wird, die Laufzeitdifferenz t₂ - t₁ der beiden Ultraschall-Impulse am Bauteil gemessen wird und aus dem Quotienten (L₂ - L₁)/(t₂ - t₁) die Ultraschallausbreitungsgeschwindigkeit für das zu untersuchende Bauteil bestimmt wird.

Erfindungsgemäß ist die Aufgabe weiterhin in einer Vorrichtung, bestehend aus einem Impulslaser, einer Zylinderlinse, deren Abstand zur Prüflingsoberfläche einstellbar ist, einem aufsetzbaren Ultraschallprüfkopf sowie einem Zeitintervallmesser gelöst, bei der sich zwischen der Zylinderlinse und der Prüflingsoberfläche ein Strahlteiler befindet, der Elemente zur Einstellung etwa gleicher Intensität beider Teilstrahlen und zur Einstellung des Abstandes der beiden Brennlinien enthält. Der Ultraschallprüfkopf ist in der Verlängerung der Verbindungslinie zwischen den Mittelpunkten der beiden Brennlinien angeordnet.

Eine vorteilhafte Variante der Vorrichtung zur zerstörungsfreien Prüfung der Oberflächenschichten sieht vor, daß der Strahlteiler aus einem Reflexionsprisma mit einem brechenden Winkel von 90°, dessen Hauptschnitt in einer Ebene mit dem der Zylinderlinse liegt, sowie aus zwei symmetrisch dazu angeordneten und um 45° geneigten Umlenkspiegeln besteht. Das Reflexionsprisma ist zusammen mit den Umlenkspiegeln senkrecht zur Richtung des einfallenden Strahles in der Ebene des Hauptschnittes verschiebbar. Dabei ist es vorteilhaft, wenn der Abstand der beiden Umlenkspiegel zum Reflexionsprisma getrennt voneinander einstellbar ist.

Eine weitere vorteilhafte, aber vereinfachte Variante der erfindungsgemäßen Vorrichtung sieht vor, daß der Strahlteiler ein dünnes planparalleles transmittierendes Plättchen ist, das in Richtung des Laserstrahles verschiebbar und mittels eines Drehelementes um eine brennlinienparallele Achse drehbar ist.

Eine dritte vorteilhafte Variante der erfindungsgemäßen Vorrichtung sieht vor, daß der Strahlteiler ein um 45° gegenüber der Strahlachse geneigter, für die verwendete Wellenlänge halbdurchlässiger Spiegel ist, hinter dem sich im durchgehenden Teilstrahl ein um 45° gegenüber der Strahlachse in die Gegenrichtung geneigter Spiegel befindet. Im abgelenkten Teilstrahl befinden sich nacheinander ein zum halbdurchlässigen Spiegel planparallel angeordneter Spiegel und danach ein zu diesem um 90° geneigter Spiegel. Die letzten beiden Spiegel sind zusammen auf einer Platte angeordnet, die in Richtung der Strahlachse des abgelenkten Teilstrahls verschoben werden kann. Der dritte Spiegel befindet sich auf einer zweiten Platte, die in Richtung des durchgehenden Teilstrahls verschiebbar angeordnet ist. Der Abstand zwischen dem halbdurchlässigen Spiegel und dem Spiegel, der im abgelenkten Teilstrahl planparallel zu diesem liegt, sowie der Abstand zwischen dem halbdurchlässigen Spiegel und dem Spiegel, der im durchgehenden Teilstrahl angeordnet ist, werden durch Verschieben der beiden Platten so eingestellt, daß die Brennlinien der beiden Teilstrahlen auf der Oberfläche des zu prüfenden Bauteils liegen.

Besonders vorteilhaft ist die Anwendung der Erfindung zur zerstörungsfreien Bestimmung der Eindringtiefe an einsatz- oder kurzzeitgehärteten Stählen, insbesondere der Ermittlung der Einhärtetiefe an laserstrahlgehärteten Eintrittskanten von Turbinenschaufeln` Weitere Vorteile des erfindungsgemäßen Verfahrens entstehen daraus, daß im Vergleich zum photometrischen Verfahren an Stahl größere Einhärtetiefen gemessen werden können, daß gleichzeitig auch die Oberflächenhärte mit bestimmt werden kann und darüber hinaus auch zweifach konkav gekrümmte Flächen gemessen werden können, falls der Krümmungsradius nicht zu klein ist.

### Ausführungsbeispiele

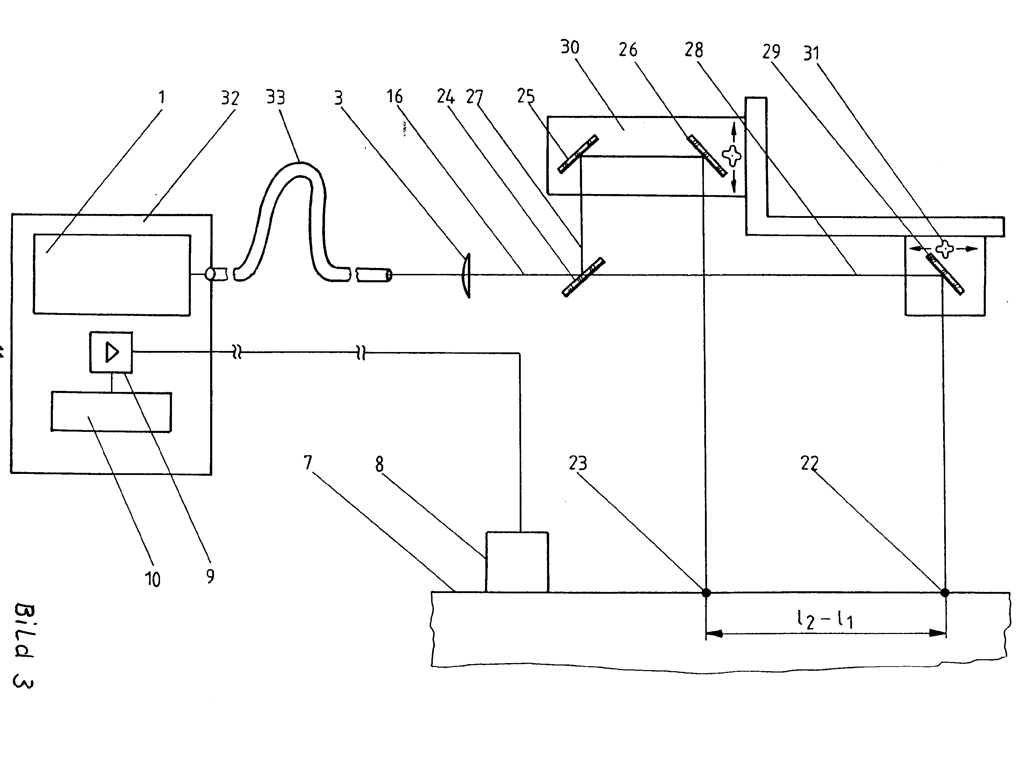

Die Erfindung wird in nachstehenden Ausführungsbeispielen erläutert. Die beiden Verfahrensbeispiele zeigen die Verfahrensdurchführung für zwei besonders wichtige Einsatzfelder - die zerstörungsfreie Bestimmung der Einhärtetiefe und der Oberflächenhärte an einem kompliziert geformten Bauteil. Bild 1 zeigt eine sehr einfache Variante der Vorrichtung, mit der die serienmäßige Prüfung von kompliziert geformten, aber formidentischen Teilen erfolgt. In Bild 2 ist eine Variante der Vorrichtung für Messungen hoher Genauigkeit an kompliziert geformten Bauteilen, die in ihrer Form und ihren Abmaßen stark schwanken, gezeigt. Bild 3 zeigt eine Variante der Vorrichtung, bei der anstelle des Bauteils der separat und kompakt ausgeführte Meßkopf auf dem Bauteil bewegt wird.

### Beispiel 1

Die Einhärtetiefe einer laserstrahlgehärteten Eintrittskante einer Turbinenendstufenlaufschaufel aus dem Material X20Cr13 soll entlang der Eintrittskante bestimmt werden. Die Krümmung der Eintrittskante ändert sich vom Schaufelfuß zur Schaufelspitze hin ständig und ist am gleichen Ort auch von Schaufel zu Schaufel unterschiedlich. Die Härtungszone reicht direkt bis zur Eintrittskante und umfaßt somit das Gebiet größter Krümmung. Infolge der Verwindung der Schaufel verwindet sich auch die Härtungszone. Eine zerstörungsfreie Prüfung der Eindringtiefe ist an diesem Bauteil mit den bisher bekannten Verfahren kaum oder nur sehr aufwendig möglich.
Die Turbinenschaufel wird in eine Halterung eingespannt, die u.a. eine Drehung um ihre Längsachse erlaubt. Die beiden Teilstrahlen werden durch die Verschiebung der Zylinderlinse entlang der optischen Achse auf die Schaufeloberfläche fokussiert. Durch die Verschiebung des Strahlteilers wird eine gleiche Intensität der beiden Teilstrahlen und ein Abstand der beiden Brennlinien von 20 mm eingestellt. Der Abstand der Prüflingsoberfläche zum Strahlteiler am Ort der beiden Brennlinien wird mit Hilfe eines einstellbaren Distanzstückes fixiert. Das zu prüfende Gebiet der Bauteiloberfläche befindet sich jetzt in der Ebene, die von den Brennlinien der beiden Teilstrahlen gebildet wird. Der Ultraschallprüfkopf wird in der Verlängerung der Verbindungslinie zwischen den Mittelpunkten der beiden Brennlinien in einem Abstand von etwa 25 mm zur näher gelegenen Brennlinie im gehärteten Gebiet an der Bauteiloberfläche befestigt. Die Mittenfrequenz des Prüfkopfes beträgt 2 MHz. Um den Abstand (L₂ - L₁) zwischen den beiden Brennlinien, an denen die beiden Oberflächenwellen angeregt werden, zu bestimmen, wird die Zeitdifferenz t₂′ - t₁′, die zwischen dem Eintreffen der beiden Impulse am Prüfkopf vergeht, für eine Vergleichsprobe mit bekannter Oberflächenwellengeschwindigkeit gemessen. In diesem Fall wird als Vergleichsmaterial günstigerweise das vergütete Schaufelgrundmaterial verwendet und damit eine Ausbreitungsgeschwindigkeit der Oberflächenwellen von c₀ = 3082m/s bestimmt. Die Messung geschieht mit dem gleichen Abstand Strahlteiler - Prüflingsoberfläche wie die spätere Messung am Bauteil. Der Abstand wird mit Hilfe eines einstellbaren Distanzstückes kontrolliert. Daraus ergibt sich der Abstand L₂ - L₁ = c₀(t₂′ - t₁′). Anschließend wird die Laufzeitdifferenz t₂ - t₁ zwischen dem Eintreffen beider Impulse am Prüfkopf für die ausgewählte zu prüfende Stelle an der Schaufeleintrittskante bestimmt. Mit c₁ = (L₂ - L₁)/(t₂ - t₁) ergibt sich bei der Mittenfrequenz von 2 MHz eine Schallgeschwindigkeit von c₁ = 3063m/s. Über ein Nomogramm c₀ - c₁ = f(d) ergibt sich daraus die Einhärtetiefe d = 0.6±0.1 mm.

Gleichzeitig ist die Genauigkeit der Bestimmung der Einhärtetiefe größer als bei der Messung der Geschwindigkeit der Oberflächenwellen mittels der Auswertung verschiedener, zeitlich nacheinander erzeugter Oberflächenwellenimpulse, da stochastische Schwankungen der mittleren Leistung, der Impulsspitzenleistung und der Laserimpulsform keine Rolle spielen.

### Beispiel 2

Ein entscheidender Qualitätskennwert, der unter Produktionsbedingungen gleichzeitig mit zu erfassen ist, stellt im Fall der laserstrahlgehärteten Eintrittskanten von Turbinenschaufeln deren Oberflächenhärte dar. Dazu wird bei der gleichen Meßanordnung der Ultraschallprüfkopf mit einer Mittenfrequenz von 2 MHz gegen einen mit einer Mittenfrequenz von 14 MHz ausgetauscht. Bei dieser Frequenz beträgt die Eindringtiefe der Oberflächenwellen nur noch 0,2 mm. Die Ausbreitungsgeschwindigkeit der Oberflächenwellen c₂ wird bei dieser Frequenz gemessen. Durch eine vorherige Einstellung unterschiedlicher Oberflächenhärten an Kalibrierproben wird eine Abhängigkeit c₀ - c₂ = f(HV_{0,05}) für den Stahl X20Cr13 aufgenommen. Die Messung der Ausbreitungsgeschwindigkeit c₂ an der Eintrittskante einer Turbinenschaufel ergibt einen Wert von c₂ = 30 19 m/s. Anhand eines Nomogramms c₀ - c₂ = f(HV_{0,05}) kann damit eine oberflächennahe Härte von 705 HV_{0,05} abgelesen werden.

### Beispiel 3

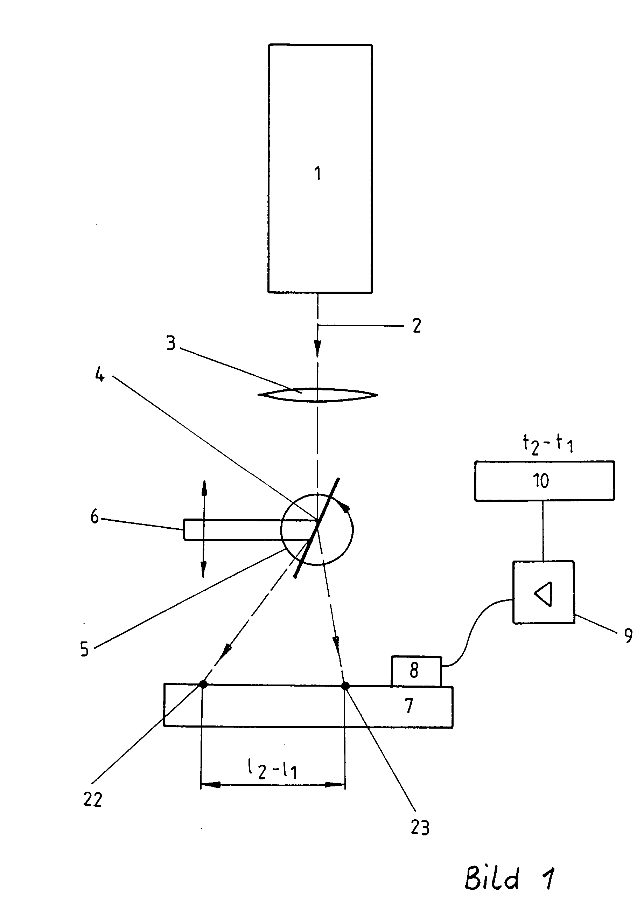

Für die Anregung der Schallimpulse wird ein Stickstoffimpulslaser (1) (Bild 1) verwendet. In den Impulslaserstrahl (2) wird eine Zylinderlinse (3) mit einer Brennweite von 250 mm eingebracht. Als Strahlteiler (4) dient ein dünnes Quarzplättchen (Dicke 0,4mm), das an einem Drehelement (5) befestigt ist, dessen Achse parallel zur Achse der Zylinderlinse (3) liegt. Das Plättchen wird mit dem Drehelement (5) soweit gedreht, bis die Intensität des reflektierten und des gebrochenen Teilstrahles etwa gleich groß ist. Der Strahlteiler (4) und das Drehelement (5) sind auf ein Translationselement (6) montiert, das parallel zum Laserstrahl (2) verschoben werden kann. Mit Hilfe des Translationselementes (6) kann durch Verschieben des Strahlteilers (4) parallel zum Ausgangslaserstrahl (2) der Abstand L₂ - L₁ der Brennlinien auf der Oberfläche des Prüflings (7) auf einen optimalen Wert eingestellt werden. Das zu prüfende Gebiet des Bauteiles befindet sich in der Brennlinie des Laserimpulses. An die Oberfläche wird über eine Feder ein Oberflächenwellenprüfkopf (8) gepreßt. Der Prüfkopf (8) wird durch eine Halterung so ausgerichtet, daß er in der verlängerten Verbindungslinie der Mittelpunkte beider Brennlinien (22,23) liegt. Die Verstärkung der Signale wird in einer gewöhnlichen Verstärkereinheit (9) vorgenommen. Für die Messung der Zeitdifferenz t₂ - t₁ wird ein elektronischer Zeitintervallmesser (10) mit einer Zeitauflösung von 1 ns verwendet. Der Vorteil dieser Variante der erfindungsgemäßen Vorrichtung besteht in ihrer Einfachheit, die sie besonders zur laufenden Qualitätsüberwachung geeignet macht. Bevorzugt wird sie an Bauteilen mit komplizierter, aber gleichbleibender Geometrie angewendet.

### Beispiel 4

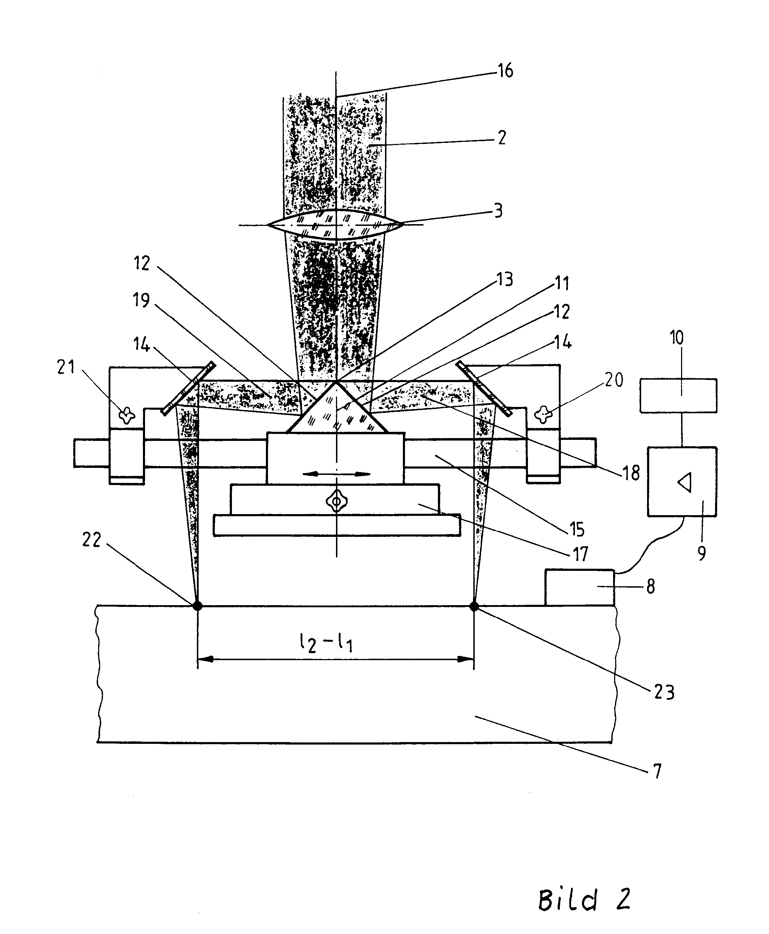

Im Gegensatz zur Ausführungsvariante im Beispiel 3 wird bei dieser Ausführungsvariante bei sonst gleichem Aufbau die Strahlteilung mit einem Reflexionsprisma (11) (siehe Bild 2) erzeugt, dessen brechende Flächen (12) verspiegelt sind. Das Reflexionsprisma (11) hat einen brechenden Winkel (13) von 90° und sein Hauptschnitt liegt in einer Ebene mit dem Hauptschnitt der Zylinderlinse (3). Das Reflexionsprisma (11) befindet sich zusammen mit den beiden Umlenkspiegeln (14) auf einer Montierung (15), die sich zur Zentrierung der brechenden Kante (13) in die Strahlmitte des Laserstrahles (2) quer zur optischen Achse (16) mit Hilfe des Translationselementes (17) verschieben läßt. Links und rechts sind etwa symmetrisch zum Reflexionsprisma (11) zwei um 45° geneigte Umlenkspiegel (14) angeordnet, die die beiden Teilstrahlen (18,19) in zwei parallel zueinander verlaufende Teilstrahlen umlenken. Der Abstand der beiden Brennlinien (22,23) auf dem Prüfling (7) kann durch das symmetrische Verschieben der beiden Umlenkspiegel (14) mittels der Translationseinheiten (20,21) variiert werden. Durch ein assymmetrisches Verschieben der beiden Umlenkspiegel (14) mittels der Translationseinheiten (20,21) kann die Höhenlage der beiden Brennlinien (22,23) getrennt voneinander eingestellt werden. Davon wird Gebrauch gemacht, wenn die Bauteiloberfläche in Richtung des Abstands L₂ - L₁ nicht senkrecht zum einfallenden Strahl (2) liegt Damit kann eine komlizierte Justage größerer Prüflinge vermieden werden. Darüber hinaus besitzt diese Ausführungsvariante noch den Vorteil, daß der Abstand Strahlteiler - Prüflingsoberfläche nicht so genau eingehalten werden muß wie bei der Variante in Beispiel 3. Damit ist diese Ausführung insbesondere vorteilhaft für Messungen hoher Genauigkeit an kompliziert geformten und in ihren Abmaßen schwankenden Bauteilen. Der Empfang der Oberflächenwellenimpulse und die Messung der Laufzeitdifferenz t₂ - t₁ erfolgt analog Beispiel 3 mit den Bestandteilen Oberflächenwellenprüfkopf (8), Verstärkereinheit (9) und dem Zeitintervallmesser (10).

### Beispiel 5

Während bei den Ausführungsvarianten der Beispiele 3 und 4 der Laser (1) unmittelbar mit der Meßanordnung verbunden ist, sieht diese Ausführungsvariante vor, den Laser (1) separat zusammen mit der Verstärkereinheit (9) und dem elektronischen Zeitintervallmesser (10) in einem Gehäuse (32) unterzubringen und mit einem Lichtleitkabel (33) mit der Meßanordnung zu verbinden. Hinter der Zylinderlinse (3) befindet sich als Strahlteiler ein halbdurchlässiger Spiegel (24). Dieser ist um 45° zur optischen Achse (16) geneigt. Im durchgehenden Teilstrahl (28) befindet sich anschließend ein um 45° in der Gegenrichtung geneigter Spiegel (29). Dieser Spiegel (29) ist auf einer entlang des durchgehenden Teilstrahles (28) verschiebbaren Platte (31) angeordnet. Im abgelenkten Teilstrahl (27) befindet sich dagegen eine Anordnung von zwei um 90° zueinander geneigten Spiegeln (25,26), deren erster (25) planparallel zum halbdurchlässigen Spiegel (24) angeordnet ist. Die beiden Spiegel (25,26) sind gemeinsam auf einer Platte (30) befestigt, die sich in Richtung des abgelenkten Teilstrahles (27), also senkrecht zur Verschieberichtung der Platte (31) verschieben läßt.

Zur Messung werden die beiden Platten (30,31) soweit verschoben, bis die optischen Weglängen des abgelenkten (27) und des durchgehenden (28) Teilstrahles gleich lang sind und die Brennlinien (22,23) der beiden Teilstrahlen auf der Oberfläche des Prüfobjektes liegen.
Der Vorteil dieser Ausführungsvariante liegt darin, daß Änderungen der zeitlichen und räumlichen Leistungsdichteverteilungen des Laserstrahles keine Auswirkungen auf die Meßgenauigkeit haben. Dadurch können auch Laser mit zeitlich sich ändernden Modenverteilungen oder Laser mit geringerer Richtungsstabilität des Laserstrahles verwendet werden bzw. der Laser in größeren Abständen zum Prüfobjekt aufgestellt werden. Besonders günstig erweist sich die mit dieser Variante mögiche übertragung des Strahles mit einem Lichtleitkabel. Damit ist diese Anordnung bei weiter gesteigerter Meßgenauigkeit insbesondere für sehr große, zum Zwecke der Messung nicht bewegbare, kompliziert geformte und in ihren Abmaßen schwankende Bauteile geeignet.

### Aufstellung der verwendeten Bezugszeichen und Begriffe

1 - Stickstoffimpulslaser
2 - Impulslaserstrahl
3 - Zylinderlinse
4 - dünnes Quarzplättchen als Strahlteiler
5 - Drehelement
6 - Translationselement
7 - Prüfling
8 - Oberflächenwellenprüfkopf
9 - Verstärkereinheit
10 - elektronischer Zeitintervallmesser
11 - Reflexionsprisma als Strahlteiler
12 - brechende Flächen des Reflexionsprismas
13 - brechender Winkel des Reflexionsprismas
14 - Umlenkspiegel
15 - Montierung der Umlenkspiegel
16 - optische Achse
17 - Translationselement
18 - Teilstrahl für Brennlinie 23
19 - Teilstrahl für Brennlinie 22
20 - Translationseinheit für Einstellung der Brennlinie 23
21 - Translationseinheit für Einstellung der Brennlinie 22
22 - Brennlinie weiter entfernt vom Ultraschallwellenprüfkopf
23 - Brennlinie näher zum Ultraschallwellenprüfkopf
24 - halbdurchlässiger Spiegel als Strahlteiler
25 - Spiegel
26 - Spiegel
27 - abgelenkter Teilstrahl
28 - durchgehender Teilstrahl
29 - Spiegel
30 - verschiebbare Platte für abgelenkten Teilstrahl 27
31 - verschiebbare Platte für durchgehenden Teilstrahl 28
32 - Gehäuse
33 - Lichtleitfaser

## Patentansprüche

1. Verfahren zur zerstörungsfreien Prüfung von Oberflächenschichten, insbesondere von kompliziert geformten großen Bauteilen, mittels der Bestimmung der Ausbreitungsgeschwindigkeit eines thermoelastisch angeregten Ultraschall-Oberflächenwellenimpulses bei einer geeignet gewählten Schallfrequenz, dadurch gekennzeichnet, daß der Laserimpuls (2) in zwei räumlich getrennte Teilimpulse (18,19) etwa gleicher Intensität aufgespalten wird, die Brennlinien (22,23) beider Teilimpulse (18,19) auf die Bauteiloberfläche (7) gelegt werden, der Abstand zwischen den beiden Brennlinien (22,23) durch eine Verschiebung des Strahlteilers (4) oder von Einzelelementen des Strahlteilers oder des nachfolgenden optischen Elementes entlang der optischen Achse auf ein von der Bauteilgeometrie, der Frequenz der Ultraschallwellen und der Dämpfung abhängendes Maß eingestellt und für nachfolgende Messungen konstant gehalten wird, der ultraschallmäßig wirksame Abstand L₂ - L₁ zwischen den beiden Brennlinien (22,23) durch die Messung der Laufzeitdifferenz t₂′ - t₁′ der thermoelastisch angeregten Ultraschallimpulse bei einem Material mit bekannter Ausbreitungsgeschwindigkeit der Ultraschall-Oberflächenwellen bestimmt wird, die Laufzeitdifferenz t₂-t₁ der beiden Ultraschallimpulse am Bauteil (7) gemessen wird und aus dem Quotienten (L₂ - L₁)/(t₂ - t₁) die Ultraschallausbreitungsgeschwindigkeit für das zu untersuchende Bauteil bestimmt wird.

2. Vorrichtung zur Durchführung des Verfahrens zur zerstörungsfreien Prüfung von Oberflächenschichten, insbesondere von kompliziert geformten großen Bauteilen von Anspruch 1, bestehend aus einem Impulslaser (1), einer Zylinderlinse (3), deren Abstand zur Prüflingsoberfläche (7) einstellbar ist, einem aufsetzbaren Ultraschallprüfkopf (8) sowie einem Zeitintervallmesser (10), dadurch gekennzeichnet, daß sich zwischen der Zylinderlinse (3) und der Prüflingsoberfläche (7) ein Strahlteiler (4) befindet, der Elemente zur Einstellung etwa gleicher Intensität beider Teilstrahlen (18,19) und zur Einstellung des Abstandes der beiden Brennlinien (22,23) enthält und der Ultraschallprüfkopf (8) in der Verlängerung der Verbindungslinie zwischen den Mittelpunkten der beiden Brennlinien (22,23) angeordnet ist.

3. Vorrichtung nach Anspruch 2, dadurch gekennzeichnet, daß der Strahlteiler (4) aus einem Reflexionsprisma (11) mit einem brechenden Winkel von 90°, dessen Hauptschnitt in einer Ebene mit dem der Zylinderlinse (3) liegt, sowie aus zwei symmetrisch dazu angeordneten und um 45° geneigten Umlenkspiegeln (14) besteht und das Reflexionsprisma (11) zusammen mit den Umlenkspiegeln (14) senkrecht zur Richtung des einfallenden Strahles (2) in der Ebene des Hauptschnittes verschiebbar ist.

4. Vorrichtung nach Anspruch 2 und 3, dadurch gekennzeichnet, daß die Abstände beider Umlenkspiegel (14) zum Reflexionsprisma (11) getrennt voneinander einstellbar sind.

5. Vorrichtung nach Anspruch 2, dadurch gekennzeichnet, daß der Strahlteiler (4) ein dünnes, planparalleles transmittierendes Plättchen (4) ist, das in Richtung des Laserstrahles (2) verschiebbar und mittels eines Drehelementes (5) um eine brennlinienparallele Achse drehbar ist.

6. Vorrichtung nach Anspruch 2, dadurch gekennzeichnet, daß der Strahlteiler (4) ein um 45° gegenüber der Strahlachse (16) geneigter, für die verwendete Wellenlänge halbdurchlässiger Spiegel (24) ist, hinter dem sich im durchgehenden Teilstrahl (28) ein um 45° gegenüber der Strahlachse in die Gegenrichtung geneigter Spiegel (29) befindet, im abgelenkten Teilstrahl (27) ein zum halbdurchlässigen Spiegel (24) planparallel angeordneter Spiegel (25) angeordnet ist und sich danach ein zu diesem Spiegel (25) um 90° geneigter Spiegel (26) befindet, der Spiegel (25) sich zusammen mit dem Spiegel (26) auf einer Platte (30) und der Spiegel (29) auf einer zweiten Platte (31) befinden, wobei die Platte (30) in Richtung der Strahlachse des abgelenkten Teilstrahles (27) und die Platte (31) in Richtung des durchgehenden Teilstrahles (28) verschiebbar angeordnet sind und die Abstände der Spiegel (25,29) zum halbdurchlässigen Spiegel (24) durch Verschieben der beiden Platten so eingestellt sind, daß die Brennlinlen (22,23) der beiden Teilstrahlen (27,28) auf der Oberfläche (7) des zu prüfenden Bauteils liegen.

## Claims

1. Method for the non-destructive testing of surface layers, in particular of large structural members of complicated shape, by means of determination of the speed of propagation of a thermoelastically excited ultrasonic surface wave pulse at a suitably selected acoustic frequency, characterised in that the laser pulse (2) is split into two spatially separate partial pulses (18, 19) of approximately equal intensity, the focal lines (22, 23) of the two partial pulses (18, 19) are applied to the surface (7) of the structural member, the distance between the two focal lines (22, 23) is adjusted by displacement of the beam splitter (4) or of individual elements of the beam splitter or of the subsequent optical element along the optical axis to an extent depending on the geometry of the structural member, the frequency of the ultrasonic waves and the damping, and kept constant for subsequent measurements, the ultrasonically effective distance L₂ - L₁ between the two focal lines (22, 23) is determined by measurement of the difference in transit time t₂′ - t₁′ of the thermo-elastically excited ultrasonic pulses with a material with a known speed of propagation of the ultrasonic surface waves, the difference in transit time t₂ - t₁ of the two ultrasonic pulses is measured at the structural member (7), and from the quotient (L₂ - L₁)/(t₂ - t₁) is determined the speed of ultrasound propagation for the structural member to be tested.

2. Apparatus for carrying out the method for the non-destructive testing of surface layers, in particular of large structural members of complicated shape, of claim 1, consisting of a pulsed laser (1), a cylinder lens (3) of which the distance from the test specimen surface (7) is adjustable, an ultrasonic testing head (8) which can be placed on top as well as a time interval measuring device (10), characterised in that between the cylinder lens (3) and the test specimen surface (7) is located a beam splitter (4) which contains elements for setting approximately the same intensity of the two partial beams (18, 19) and for setting the distance between the two focal lines (22, 23), and the ultrasonic testing head (8) is arranged in extension of the connecting line between the centres of the two focal lines (22, 23).

3. Apparatus according to claim 2, characterised in that the beam splitter (4) consists of a reflecting prism (11) with a refractive angle of 90° of which the principle section lies in the same plane as that of the cylinder lens (3), as well as of two deviation mirrors (14) arranged symmetrically thereto and inclined by 45°, and the reflecting prism (11) together with the deviation mirrors (14) is slidable perpendicularly to the direction of the incident beam (2) in the plane of the principal section.

4. Apparatus according to claims 2 and 3, characterised in that the distances from the two deviation mirrors (14) to the reflecting prism (11) are adjustable separately from each other.

5. Apparatus according to claim 2, characterised in that the beam splitter (4) is a thin plane-parallel transmitting lamina (4) which is slidable in the direction of the laser beam (2) and rotatable by means of a rotating element (5) about an axis parallel to the focal lines.

6. Apparatus according to claim 2, characterised in that the beam splitter (4) is a mirror (24) which is inclined at 45° to the beam axis (16) and semi-transparent to the wavelength used and behind which is located in the penetrating partial beam (28) a mirror (29) inclined at 45° to the beam axis in the opposite direction, in the deflected partial beam (27) is arranged a mirror (25) arranged plane-parallel to the semi-transparent mirror (24), and behind it is located a mirror (26) inclined at 90° to this mirror (25), the mirror (25) together with the mirror (26) is located on a plate (30), and the mirror (29) on a second plate (31), wherein the plate (30) is arranged so as to be capable of sliding in the direction of the beam axis of the deflected partial beam (27), and the plate (31) in the direction of the penetrating partial beam (28), and the distances from the mirrors (25, 29) to the semi-transparent mirror (24) are adjusted by sliding the two plates in such a way that the focal lines (22, 23) of the two partial beams (27, 28) lie on the surface (7) of the structural member to be tested.

## Revendications

1. Procédé pour le contrôle non destructif de couches superficielles, notamment de composants de grande taille ayant des formes compliquées, au moyen de la détermination de la vitesse de propagation d'une impulsion ultrasonore de surface excitée par voie thermoélastique, pour une fréquence acoustique choisie de façon appropriée, caractérisé en ce qu'on divise l'impulsion laser (2) en deux impulsions partielles (18,19) séparées dans l'espace et possédant approximativement la même intensité, que les lignes focales (22,23) des deux impulsions partielles (18, 19) sont appliquées sur la surface (17) du composant, qu'on règle la distance entre les deux lignes focales (22,23), au moyen d'un décalage du diviseur de faisceau (4) ou de composants individuels du diviseur de faisceau ou de l'élément optique disposé en aval le long de l'axe optique, sur une valeur qui dépend de la géométrie du composant, de la fréquence des ondes ultrasonores et de l'amortissement, et on la maintient constante pour des mesures ultérieures, qu'on détermine la distance L₂-L₁, active pour les ultrasons, entre les deux lignes focales (22,23) au moyen de la mesure de l'intervalle de temps de propagation t₂′-t₁′ des impulsions ultrasonores excitées par voie thermoélastique, dans un matériau dans lequel la vitesse de propagation des ondes de surface ultrasonores est connue, qu'on mesure l'intervalle de temps de propagation t₂-t₁ des deux impulsions ultrasonores au niveau du composant (7) et qu'on détermine, à partir du quotient (L₂-L₁)/(t₂-t₁), la vitesse de propagation des ultrasons pour le composant devant être examiné.

2. Dispositif pour la mise en oeuvre du procédé de contrôle non destructif de couches superficielles, notamment de composants de grande taille ayant des formes compliquées selon la revendication 1, constitué par un laser (1) produisant des impulsions, une lentille cylindrique (30), dont la distance par rapport à la surface (7) de l'échantillon à contrôler est réglable, une tête de contrôle ultrasonore (8) pouvant être mise en place ainsi qu'un appareil (10) de mesure de l'intervalle de temps, caractérisé en ce qu'entre la lentille cylindrique (3) et la surface (7) de l'échantillon à contrôler est disposé un diviseur de faisceau (4), qui contient des éléments pour régler approximativement la même intensité pour les deux faisceaux partiels (18,19) et pour régler la distance des deux lignes focales (22,23) et que la tête de contrôle ultrasonore (8) est disposée dans le prolongement de la droite passant par les centres des deux lignes focales (22,23).

3. Dispositif selon la revendication 2, caractérisé en ce que le diviseur de faisceau (4) est constitué par un prisme à réflexion totale (11) possédant un angle de réfraction de 90° et dont la section principale est située dans un plan coïncidant avec celui de la lentille cylindrique (3), ainsi que par deux miroirs de renvoi (14) disposés symétriquement par rapport à ce prisme et inclinés à 45°, et que le prisme à réflexion totale (11) peut être déplacé, conjointement avec les miroirs de renvoi (14), perpendiculairement à la direction du rayon incident (2) dans le plan de la section principale.

4. Dispositif selon les revendications 2 et 3, caractérisé en ce que les distances des deux miroirs de renvoi (14) par rapport au prisme à réflexion totale (11) sont réglables séparément l'une de l'autre.

5. Dispositif selon la revendication 2, caractérisé en ce que le diviseur de faisceau (4) est une plaquette mince transparente (4), à faces planes parallèles, qui peut être déplacée dans la direction du faisceau laser (2) et peut être entraînée en rotation au moyen d'un élément d'entraînement en rotation (5) autour d'un axe parallèle à la ligne focale.

6. Dispositif selon la revendication 2, caractérisé en ce que le diviseur de faisceau (4) est un miroir (24) incliné de 45° par rapport à l'axe (16) du faisceau et semi-transparent pour la longueur d'onde utilisée et derrière lequel est disposé, dans le faisceau partiel traversant (28), un miroir (29) incliné de 45°, en sens opposé, par rapport à l'axe du faisceau, qu'un miroir (25), dont les faces planes sont parallèles au miroir semi-transparent (24), est situé dans le faisceau partiel dévié (27) et qu'un miroir (26) incliné de 90° par rapport à ce miroir (25) est disposé en aval de ce dernier, que le miroir (25) est situé, ainsi que le miroir (26), sur une plaque (30) et que le miroir (29) est situé sur une seconde plaque (31), la plaque (30) étant disposée de manière à être déplaçable dans la direction de l'axe du faisceau partiel dévié (27), tandis que la plaque (30) est disposée de manière à être déplaçable dans la direction du faisceau partiel traversant (28), et les distances des miroirs (25,29) par rapport au miroir semi-transparent (24) sont réglées au moyen du déplacement des deux plaques de telle sorte que les lignes focales (22,23) des deux faisceaux partiels (27,28) se situent sur la surface (7) du composant à contrôler.
